# EUROPEAN PATENT SPECIFICATION

(11) **EP 4 286 783 B1**
(45) Date of publication and mention of the grant of the patent: **09.04.2025**
(21) Application number: 23175989.5
(22) Date of filing: 30.05.2023
(51) Int. Cl.: F28D 20/02, F28F 13/06

(54) **PACKAGING CAPSULE DEVICE FOR A THERMAL ENERGY STORAGE SYSTEM WITH MACRO-ENCAPSULATION**
KAPSELVERPACKUNGSVORRICHTUNG FÜR EIN WÄRMEENERGIESPEICHERSYSTEM MIT MAKROVERKAPSELUNG
DISPOSITIF DE CAPSULE D'EMBALLAGE POUR SYSTÈME DE STOCKAGE D'ÉNERGIE THERMIQUE À MACROENCAPSULATION

(30) Priority: 30.05.2022 GR 20220100448
(43) Date of publication of application: 06.12.2023
(73) Proprietor: Aristotle University of Thessaloniki - E.L.K.E., 54636 Thessaloniki (GR)
(72) Inventor: KALFAS, Anestis, 54124 Thessaloniki (GR); GKOUTZAMANIS, Vasileios, 55132 Thessaloniki (GR)
(74) Representative: Petsis, Christos

(56) References cited:
- CN-A- 104 634 152
- US-A- 2 525 261
- US-A1- 2014 231 698

## Description

### Field of the invention

The present invention relates to phase change material container device as well as to a thermal energy storage system. A phase change material according to the preamble of claim 1 is known from document US 2525261 A.

### Background of the invention

The encapsulation of thermal energy storage material is a commonly known technique to improve heat transfer with a stored medium. Encapsulation also allows the prevention of an undesired mixing of said medium with the surrounding environment to avoid contamination thereof and facilitates the ease of transportation, as well as the maintenance for replacement thereof.

The main parameters considered in encapsulation are the size and morphology of the capsule shell. The thickness and material type of the coating are also critical for the effectiveness of the stored medium: a thin capsule may have lower structural and thermal strengths, whereas an excessively thick coating may reduce the amount of the stored medium. Based on the encapsulation size, there are three major categories identified: macro-encapsulation when said size >1 mm, micro-encapsulation for 1-1000 µm or nano-encapsulation in case 1-1000 nm.

### Prior art

WO2020238213 discloses a phase change material packaging structure to be used in a heat storage tank. Said packaging structure comprises a packaging shell wherein said PCM material is packaged. It further comprises connecting parts which are arranged on two opposite sides of the packaging shell, which are used for getting connected with two further packaging shells respectively. A flow gap is formed between said two connected packaging shells for carrying hot fluid flow. A plug-in connection mode is adopted between the packaging shells; modular packaging of the phase change materials can thus be achieved, wherein the package shell can be stacked. When the packaging shell is applied to a large heat storage tank, the occupied area of the heat storage tank can be reduced. The PCM material is packaged in the packaging shell, so that said PCM material is not in direct contact with the heat carrying fluid, avoiding contamination of the heat carrying fluid by said PCM material. Said flow gap formed between the adjacent packaging shells allows the heat carrying fluid to flow through the upper and lower surfaces of the packaging shell for heat exchange, involving some heat exchange efficiency.

WO2007/072308 discloses a vertical phase-change-memory (PCM) cell, comprising a stack of a bottom electrode contacting a first layer of phase change material, a dielectric layer having an opening, a second layer of phase change material in contact with the first layer of PCM material through the opening in the dielectric layer and a top electrode contacting this second layer of PCM material.

US 4205656 A of Scarlata Robert W. describes a thermal storage system for use with a solar collector and/or heat pump, including a plurality of discrete heat reservoirs having regular geometric shapes such as spheres or cylinders for forming a self-sorting array of the reservoirs when stacked in a storage bin. However, this document does not indicate alternatives of the discrete heat reservoirs. It is dependent on the needs of the actual configuration, therefore, the goal is to store heat for a long period of time. However, different geometrical configurations as the one claimed below, aim for rapid charging and discharging therefore quick exchange of the stored energy.

CN104634152 A of Li Yan discloses an energy storage apparatus comprising a housing, a liner, an insulation layer, a corrugated pipe and phase-change energy storage material. The housing is provided with a fluid inlet and a fluid outlet. The main difference to the claimed invention is the actual corrugated pipe that comprises of a long pipe, formed in a spiral manner inside the energy storage. Therefore, this configuration is not based on a packaging capsule of a toroidal shape, rather to a long, corrugated pipe that is rotated in a spiral manner around a main vertical axis.

The latter document thus discloses a storage capsule creating the space that is necessary for storing phase change materials having a shape the outer surface whereof is provided with a grooved arrangement, wherein the capsule is filled with. Said storage device is intended for nuclear energy with heat trapping elements consisting of storage capsules. The total length of the tubing involved is quite significant. In order to store some amounts of PCM material, a quite extended amount of capsules will be needed in this case.

In this case, the capsules of the pipe type with significantly extended total length is featured by having an elongated spiral configuration. Said spiral configuration of the pipe device carries either the heat transfer fluid or an amount of HCV/PCM used for the purpose.

### Aim of the invention

In respect of the present invention, packaging capsules having a suitable shape for containing a PCM material are proposed, so as to provide thermal energy storage and thermal management. These specifically shaped capsules are designed as part of a cooling/heating system intended for purposes including power generation, building envelopes and cylindrical objects required to operate within specific temperature limits, such as electrical batteries used in hybrid/electric transportation in the latter case. Said capsules are specifically designed to work in conjunction with a gaseous or liquid fluid, designated as a heat transfer fluid that is used to transport heat between the different points within the global enveloping system, wherein they are incorporated.

It is aimed according to the invention to provide an adequate positioning of said specifically designed capsules in said thermal energy storage system.

### Summary of the invention

A phase change material container device according to the invention is defined in claim 1.

There is thus proposed according to the invention a phase change material container device for storing an amount of storage material consisting of PCM material, intended to act as a heat collection member. Said device comprises an enveloping shell, for storing said phase change material PCM therein. Said container device consists of an individual capsule which has a toroidal ring shape with a longitudinal axis ℓ, which is constituted by a rigid wall enclosing a substantially closed space that is fillable, with said PCM material. The outer surface of the shell housing is provided with a heat exchanger device. Said heat exchanger is remarkable in that it consists of a groove pattern composed of a plurality of grooves, in particular as an array of grooves extending in a fan of successive radial planes all passing through the geometrical center of the toroidal capsule. Said packaging capsule is filled with PCM material. Said filling is encapsulated in said capsule and it is in a different material than said housing, wherein the encapsulation material is chemically and physically distinct from the PCM material stored inside said capsule. Thanks to said toroidal ring shape of the capsule, a remarkably smooth heat exchange/transfer is achieved through said heat exchanger device. In addition, thanks to the presence of the container housing, there is no direct contact between the PCM located inside it and the environment surrounding the capsule resulting in that contamination thereof by the latter is prevented.

In respect of this invention a heat exchanger means is thus proposed on the surface of said specifically designed capsule, to increase the heat transfer surface area between said PCM material and the abovementioned heat transfer fluid, for making the PCM packaging capsule more efficient thereby improving the overall performance.

According to the invention, said array of grooves is arranged as a set of several convolutional grooves extending as successive uninterrupted convolutions, esp.single ones. Said grooves are arranged densely on the outer surface of said housing in a plane extending radially through the geometrical center of said capsule. Said dense array of convolutional grooves especially equidistant, promotes an efficient heat transfer/exchange.

The tubular part of said toroidal capsule has a circular cross section, improving heat exchange efficiency resulting from an increased ratio of contact surface to enclosed volume obtained with the circular toroidal shape of the capsule, wherein said convolutional grooves are circular, extending in said radial plane converging to the geometrical center of the capsule. Said grooves are thus arranged transversely, in said plane that is also orthogonal on its tubular axis ℓ, mutually spaced at a regular distance from each other. Said grooves pattern substantially increases the heat transfer surface between said capsule enclosing the PCM and the heat transfer fluid circulating around it. This enhances a free evacuation of the heat exchange from the inner PCM to the outer surface of the capsule, without local obstruction, especially in closed loop. Such an array of convolutional grooves, especially equidistant, further promotes a homogeneous heat transfer/exchange uniformly. Specifically, said capsule has a ratio of its overall radius to the diameter of its tubular part that is comprised in the range between 1,5 and 3,5, preferably between 1,7 and 1,9, more preferably about 1,8 approximately; particularly with a radius from the center of the torus to the center of the tube comprised between 30 mm up to 60 mm and a radius of the tube equal to 12 mm up to 18 mm, particularly wherein the diameter of the capsule is between 80 and 90 mm, more particularly 83 mm and the diameter of the tube is about 23 mm.

The dimensions of the items involved herewith play a quite significant role resulting from the geometric feature characterizing the proposed thyroidal macro-encapsulation with specific dimensions which are extremely different from the pipes disclosed by CN104634152 A in that their total length is much greater, not to say not even comparable, than the characteristic longitudinal dimension of a capsule according to the invention.

The packaging capsule may have an overall length of about 306 mm esp. whereas its thickness measured from its cross-section may be about 43,1 mm. It is thus to be considered that the packaging capsule has rather small dimensions in comparison with the corrugated pipe in the known heat exchange device disclosed by CN104634152 A. The global effect thereof is that the performance of the packaging capsules in terms of heat transfer characteristics is improved up to 40 % thanks to the significantly increased heat exchange surface of the extended amount of smaller capsules which are thus mutually added. In addition, this allows a rapid exchange of thermal loads with the environment, this providing a quick thermal loading globally.

Moreover, the compact configuration of the packaging capsule according to the invention makes it more sustainable and robust compared to the corresponding elongated spiral configuration disclosed in CN104634152 A. In the latter system, the phase change material PCM is stored in a system featured by two holes defining its inlet and outlet respectively, thus defining an open system. This is in contrast however with the encapsulated configuration of the packaging capsule according to the invention which is a closed system that is completely isolated from the surrounding space. It has an orifice yet, which is only used though for the filling of the capsule, and not doing the functioning thereof, when the capsule works.

According to the invention, partial grooves are incorporated in-between. Said partial grooves extend from the outer perimeter section of said capsule inwardly to said geometrical center thereof over a certain distance on said surface of the housing, in particular half or less of the cross perimeter between said outer perimeter and said inner perimeter respectively. This quite simple but remarkably adapted design of double groove profile further enhances heat transfer at the outer perimeter of the capsule. This is particularly advantageous since the outer perimeter -with greater surface than the inner perimeter- is generally featured by a lower heat exchange rate compared to the inner perimeter of the capsule having a smaller surface, and thus comparatively a greater heat accumulation locally.

Said partial grooves are consecutively placed substantially in the middle between successive whole grooves, at the outer perimeter of the capsule's surface. Said outer perimeter section of the toroidal capsule has thus twice as many grooves compared to the inner perimeter section facing the geometrical center of the capsule. The number of partial grooves is a function of the ratio of the inner toroidal radius to the outer radius. Apart from a specific ratio between these two the number of whole grooves is limited by the ratio of the tube's radius to the large radius of the capsule, esp. at the inner perimeter area of the capsule owing to the smaller area available there, compared to the outer perimeter thereof, whereas said capsule comprises several partial grooves that are arranged consecutively, at the outer surface of the capsule. In particular, the number of said convolutional grooves is of at least 60, preferably >70 for each category of grooves.

Said groove pattern thus comprises partial and whole grooves, thereby significantly increasing the effective surface and thus also even more the heat transfer between the stored medium and the surrounding environment. A double set of grooves is thus remarkably provided according to the invention to additionally increase the heat transfer surface area between the PCM and the heat transfer fluid. The whole grooves are circumferentially arranged as transverse convolutions at the toroidal surface, whereas the partial grooves are incorporated between the whole grooves following a similar path and further improve the heat transfer on the contained PCM, in the outer perimeter section of the toroidal capsule.

According to a particular embodiment of the invention, said grooves have the same cross section, particularly substantially constant, which is more particularly U-shaped, esp. square like. Thanks to this combined specific shape of the capsule and the remarkable array of grooves pattern proposed, not only a smooth heat exchange/transfer is achieved through said heat exchanger device, but also a perfectly homogeneous and uniform heat transfer/exchange.

According to a preferred embodiment of the invention, nozzle means is arranged in said housing that communicate with the inner space of the capsule through an aperture, so as to allow filling the PCM phase change material in the capsule.

According to a specially preferred embodiment of the invention said nozzle means comprises a socket for filling said capsule with storage material PCM, wherein a feed port is provided on the capsule, especially at the outer surface of the housing, wherein the feed port communicates with the interior of the housing. In particular, said nozzle means, resp. aperture are arranged on top of the outer perimeter of said toroidal housing, thereby enhancing the filling flow of the filling fluid from an outer filling source to said inner space of the capsule. In particular, said socket may have a prismatic profile extending along an axis extending orthogonally from said capsule, respectively with a cylindrical shape extending over a height h, e.g. 4,75 mm, more particularly wherein said height h is comprised between the radius ρ of the socket section and its diameter ϕ, e.g. about 8 mm, preferably wherein the ratio between said height h and said radius is comprised between 1 and 1,5 , more preferably between 1,1 and 1,3 , even more preferably between 1,15 and 1,2.

According to a more particular embodiment of the invention, said housing is integrated with the capsule made of one single piece, esp. wherein said socket is made of one piece with said capsule as well, wherein the socket is integrally formed with the housing. This allows standard manufacturing thereof by 3D printing.

According to a further embodiment of the invention, the capsules are made of metal materials, in particular copper, aluminum and/or stainless steel. The metal housing materials thus include copper, aluminum and stainless steel.

Alternatively, the capsules can be made of non-metal materials, in particular polyvinyl chlorides PVCs or thermoplastics, such as low-density polyethylene, polyolefin and/or high-density polyethylene, particularly wherein the housing is formed by injection molding of a polymer material.

According to the invention, said PCM filing is made of materials with a large latent heat of fusion and desirable melting/freezing point that store/release large amounts of heat, in particular wherein said PCM has a latent heat of fusion in excess of 200 kJ/kg.

The key to unlock the full potential of macro-encapsulation is to provide an efficient, safe, stable and cost-effective cooling/heating solution that is capable to store phase change material referred to hereafter as PCM. The PCM have a large latent heat of fusion and desirable melting/freezing point that can store/release large amounts of heat, thus operating as a thermal battery which is compact.

According to a first application of the invention, the PCM material type is made of organic materials, particularly paraffin and fatty acids.

According to an alternative application of the invention, the PCM material is made of inorganic materials, particularly hydrated salts.

According to a further alternative application of the invention, the PCM material is made of eutectic materials particularly eutectic fatty acid mixtures along with hydrated salts. According to a still further alternative application of the invention, the PCM material is made of green organic alternatives based on biobased PCMs, notably edible oils and fat, waste animal fat, plant oils and waste cooking oil.

The encapsulation material is thus chemically and physically distinct from the PCM material stored inside the capsule.

The PCM material fills the capsule containment in either a permanent or temporary manner after getting incorporated therein through a socket.

The invention also relates to a thermal energy storage system according to claim 12 with toroidal macro-encapsulation, comprising a plurality of capsules as defined above, wherein said capsules are incorporated individually without being connected to each other, wherein the capsules are equally filled with said PCM material in either a permanent or temporary manner.

In order to allow for heat transfer between the surrounding environment and the PCM through the capsule, said heat transfer fluid that can be either in gas or liquid form. The heat transfer fluid can be air, water or glycol-based mixture such as ethylene-glycol water, or propylene glycol water mixtures. The process therefor is that the heat transfer fluid is directed to the filled capsules to drive away the stored heat in the PCM at discharging or store heat at the colder PCM at charging.

In a first embodiment of said system according to the invention, it comprises a thermally insulated energy storage tank in which a plurality of said capsules are incorporated, wherein a heat transfer fluid is incorporated for surrounding said capsules requiring said thermal regulation.

The use of packaging as closed systems in large amounts in thermal management system according to the invention is not disclosed by said closest prior art, which instead, discloses one single heat exchange system that is spiral like open system.

None of latter temperature ranges are disclosed in the prior art referring to 4-7°C and 40-90°C respectively.

In a second embodiment of the system according to the invention, said capsules are embedded in passive elements, more particularly building envelopes or smaller walls surrounding objects for thermal regulation through passive cooling and heating, wherein a heat transfer fluid is incorporated for surrounding said capsules requiring said thermal regulation. Each said capsule is thus positioned substantially inside passive elements in wall elements.

According to another embodiment of the system according to the invention, each said capsule is positioned symmetrically around objects requiring thermal regulation through passive cooling/heating, notably electrical batteries used in electric transportation.

The aforementioned object of the present invention is thus fulfilled by providing a multitude of toroidal capsules, wherein the capsules are arranged in three ways:
- individually within a thermally insulated enclosure that may consist of a thermal energy storage tank;
- said capsules may also be arranged as a passive element being a building wall envelope; or
- said capsules may also be surrounding a cylindrical object requiring cooling or heating. So, the applied arrangement is either in a randomly placed manner, in a packed-bed configuration consisting of a multitude of toroidal capsules, or in an aligned manner around cylindrical objects such as batteries used in hybrid-electric transportation.

According to an additional embodiment of the invention, the positioning of the toroidal capsules is thus provided either in a randomly placed manner, or in a packed-bed configuration consisting of a multitude of toroidal capsules that are arranged individually.

According to an alternative embodiment of the invention, the positioning of the toroidal capsules is provided in an aligned manner around cylindrical objects, such as batteries used in hybrid-electric transportation.

In a first use of the capsules containing the PCM material, they are incorporated randomly or symmetrically inside said thermally insulated tank.

In a second use of the capsules containing the PCM material, they are arranged inside the walls of building as passive elements to reduce building energy consumption and improve indoor environment.

According to a third use of the invention, it is based on passive cooling/heating mechanisms. The toroidal capsule is part of an object's, such as an electrical battery cooling/heating system, where the heat generated/absorbed by the object is absorbed/provided by the PCM material, to sustain the temperature of the object within its operating temperature limits. The use of this technology increases the life cycle of the cooled/heated objects and thus, reduces the overall cost of the system where the objects are placed.

The heat exchange is achieved by a heat transfer fluid. Regarding the above-mentioned first use of the capsule, the heat transfer fluid can be sole water or 50-50 wt. water/glycol mixture, circulating the tank and hence the capsules to either drive away the generated heat loads of the warm storage or store the heat loads in the cooled storage tank.

In the second use of the capsule, the walls including the toroidal capsules act as the heat sinks/sources according to the operation. When the temperature of the space enclosed within the envelope walls exceeds the phase change temperature, the toroidal capsules including PCM act as heat sinks, absorbing the space's extra heat, sustaining the temperature to specific temperature levels. When the temperature of the enclosed space is reduced below a certain temperature level, the toroidal capsules comprising PCM material release the heat and sustain the space's temperature constant. The heat transfer fluid in this case is air, which can be either used in a natural manner -then corresponding to a gravity-based convection or through a secondary ventilation system -then corresponding to a forced convection-.

In the third use, the surrounding air is used as the heat transfer fluid, unless a second cooling system is used based on a liquid coolant to drive away the object's such as said battery, heat loads.

The advent of 3D printing techniques provides a promising cheap and simple tool to develop a large number of capsules needed for this type of energy storage systems.

In summary, there is thus provided a toroidal macro-encapsulation device for a thermal energy storage by means of a thermal energy storage apparatus comprising a tank enclosing a plurality of toroidal capsules that includes said phase change material PCM. The toroidal capsule can be permanently or temporarily sealed to contain the encapsulated PCM. The material of the toroidal capsule is chemically and physically distinct from the PCM. The entity consisting of the capsule and the PCM can be used in a thermal management and storage system, to provide active or passive cooling to systems such as power generation, building envelopes and around objects requiring thermal regulation in a specific operating temperature range, e.g. electrical batteries used in hybrid-electric transportation. Said filled capsules are selected to store and discharge thermal energy at temperatures higher than -10°C and lower than 80°C.

### Brief description of the drawings

Fig. 1 is a three-dimensional schematic view of the capsule also showing the surrounding space and environment as well as a sample of PCM material used according to the invention.
Fig. 2 is a three-dimensional detailed view at enlarged scale of part of the capsule highlighting a grooves pattern on its surface according to the invention.
Fig. 3 is a cross-sectional view of the vertical symmetry plane of the capsule showing the cylindric diameter and the contained PCM material according to the invention.
Fig.4 is a three-dimensional cross-sectional view at a further enlarged scale of a reduced part of the capsule represented in Fig. 2, yet empty, showing the capsule's socket to fill in the capsule with the PCM material according to the invention.
Fig. 5 is a generic view of the macro-encapsulated geometry of a capsule device according to an embodiment of the invention.
Fig. 6 is a schematic representation of a thermally insulated energy storage tank, wherein a plurality of capsules is arranged in a symmetrically packed manner according to the invention.
Fig. 7 is a side view of a further arrangement of the capsules according to the invention inside a passive element being a building wall envelope or a smaller wall surrounding an object requiring thermal regulation through passive cooling/heating.
Fig. 8 is a side view of a still further arrangement of a set of the toroidal capsules according to the invention, positioned around objects requiring passive heating/cooling, such as electrical batteries used in electric transportation.
Fig. 9 & 10 each are an experimental representation of a contour plot emerging out of a computational fluid dynamics (CFD) analysis, showing the necessity of placing the partial grooves at the outer side of the toroidal capsule, to further enhance melting/solidification at that point according to the invention.
Fig. 11 shows a side view of encapsulated geometry of a packaging capsule as reference, Xu T et al 2021 and Axiotherm, 2019.
Fig. 12 represents a cross sectional view of said packaging capsule represented in fig. 11.
Fig. 13 is a schematic sectional view of a corrugated pipe used in the known heat exchanging device.

### Detailed description

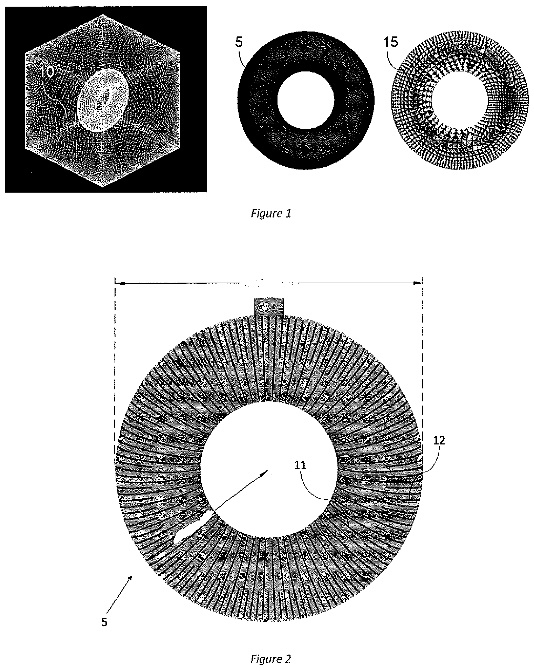

Figs. 1 shows a capsule 5 having a toroidal shape which is intended for containing a PCM material 15 wherein the PCM have large latent heat of fusion and desirable melting, resp. freezing point that can store, resp. release large amounts of heat.

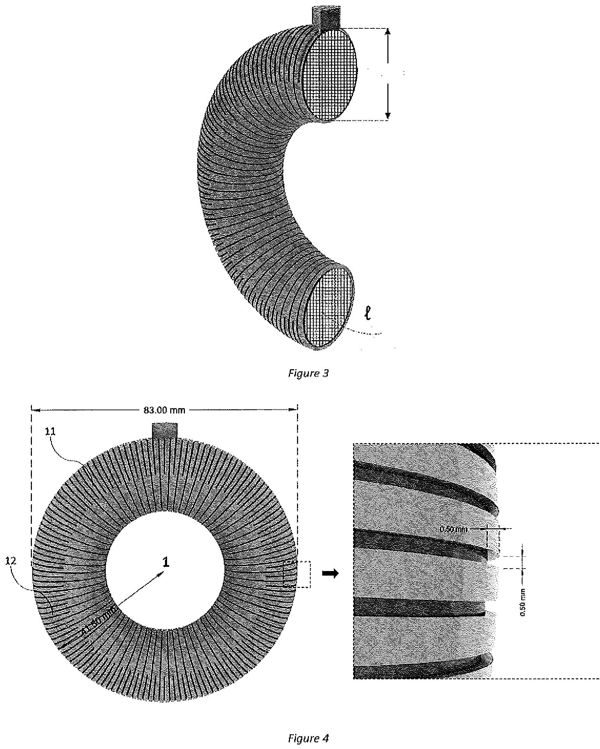

Fig. 2 shows a groove pattern on the capsules 5, as visible in greater detail in Fig. 3, that is remarkable by the incorporation of whole grooves 11, which are continuous and uninterrupted, and additionally partial grooves which are limited 12 in an alternating arrangement 11-12-11-12...11-12-11.... Said grooves 11, resp. 12 are particularly appropriate to increase the surface area of the capsule 5 and hence, heat transfer between the PCM 15 contained in the capsule 5 and the surrounding medium such as a heat transfer fluid 10.

A set of grooves is thus incorporated on its surface to increase said heat transfer. Preferably, said grooves are arranged on its surface in a radially extending plane. More preferably, said grooves are arranged as whole circular grooves 11 extending as successive uninterrupted circles orthogonally on its longitudinal axis ℓ, circular as well, at a regular distance from each other. In order to further increase said heat transfer, partial grooves 12 are provided additionally on its surface, also extending radially but as a fraction of circle line also orthogonally on said circular longitudinal axis ℓ at an even distance between two successive adjacent whole circular grooves 11. Said fraction of circle line preferably extends over less than half the circle, more preferably at the outer perimeter area of the said toroidal capsules 5, where the distance between adjacent grooves is larger, thereby optimizing the heat transfer increase. Said groove pattern thus comprises partial and whole grooves 11, 12, which increases the effective surface and the heat transfer between the stored medium and the surrounding environment.

There are thus essentially two types of grooves on the capsule surface: the whole grooves 11, which are convolutional, and the partial grooves 12, which are intercalated between successive whole grooves 11 and further improve the heat transfer of the PCM filled capsules 5. The number of partial grooves 12 is a function of the ratio of the inner toroidal radius to the outer radius. After a specific ratio between these two, there is a limit of the whole grooves 11 that can be incorporated in the capsule 5.

Said grooves have the same cross section, which is preferably constant, particularly U-shaped, more particularly square like as shown in Fig. 3.

Fig. 3 shows a half fraction of the toroidal capsule 5 with a tubular structure with a circular cross-section, with a cylindric diameter e.g. of 23 mm, further containing the PCM material. Said overall radius to diameter ratio is comprised in range between 1,5 and 3,5, preferably 1,7 and 1,9 , more preferably about 1,8 approximately.

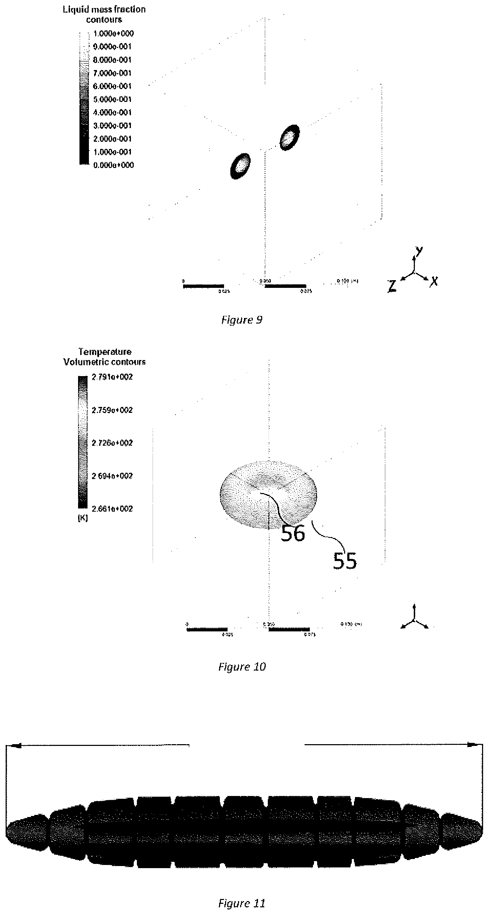

Fig. 9 & 10 show the need to further increase heat transfer at the outer perimeter of the toroidal capsule 5. Since there is a manufacturing limit preventing from placing solely whole grooves 11 on the capsule 5, partial grooves 12 are placed between consecutive whole grooves 11, at the outer perimeter of the capsule's surface. Said partial grooves 12 extend from the outer perimeter section 55 of said capsule 5 inwardly to said geometrical center thereof over a certain distance on said surface of the housing, in particular half or less of the path between said outer and inner perimeters, wherein said outer perimeter section 55 of the toroidal capsule has twice as much grooves, compared to the opposite inner perimeter section 56.

The toroidal capsules 5 form container devices for PCM material packaged therein. The specific toroidal shape selected for the capsule 5 appears to be most appropriate since it allows to store or release heat rapidly, thanks to their larger surface-to-volume ratio, particularly when having a radius of e.g. 41,5 mm corresponding to an external diameter of 83 mm as shown in Fig. 2. Because of their relatively small size, their manufacturing can be achieved through 3D-printing techniques in abundance and at small cost.

The capsules are of metal materials, notably including copper, aluminum and stainless steel. Alternatively, said capsules are of non-metal materials, notably including polyvinyl chlorides (PVCs), thermoplastics such as low-density polyethylene, polyolefin and high-density polyethylene.

The capsules 5 contain PCM phase change materials 15, which can be organic or inorganic, as well as eutectic materials. Green organic alternatives based on biobased PCMs can also be used. The PCM should preferably have a latent heat of fusion in excess of 200 kJ/kg.

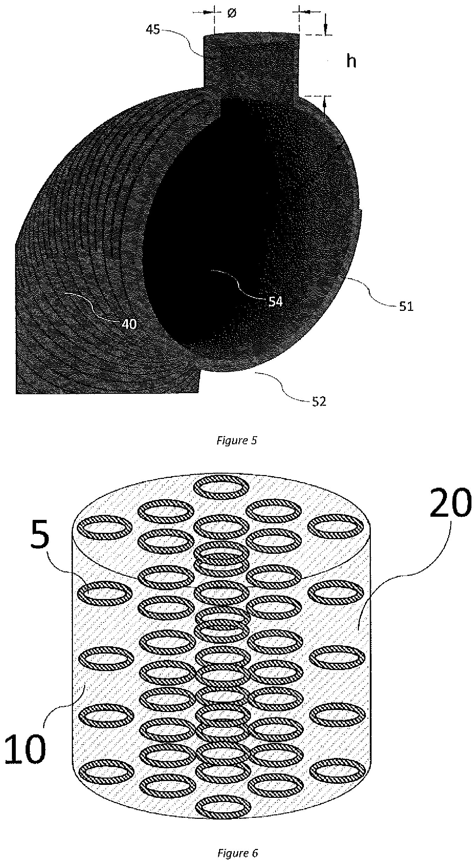

The PCM is filled in the capsule 5 through a socket 45 on the capsule as shown in Fig. 5.

Fig. 6 shows a thermally insulated thermal energy storage tank 20, including a multitude of toroidal capsules 5, acting as heat collection members. In order to allow for heat storage or removal, a surrounding space 10 is provided within said tank 20 including heat transfer means (air/liquid) to transfer heat from/to the toroidal macro-capsule 5, to/from the PCM material 15 stored in the capsule 5.

A key challenge nowadays are the rapid charging/discharging characteristics, due to the rapidly changing daily energy demand. Specific characteristics to increase the heat transfer of the capsules are set out below.

In order to allow for heat transfer between the surrounding environment and the PCM 15 through the capsule 5, a heat transfer fluid 10 is used that can be either in gas or liquid form. The heat transfer fluid can be air, water or any glycol-based mixture such as ethylene-glycol water or propylene glycol water mixtures. The process therefor is that the heat transfer fluid 10 is used to drive away the stored heat in the PCM at discharging or store heat at the colder PCM at charging. Depending on the process, the PCM can therefore be in solid or liquid form.

Many variations of the capsules' placement and positioning based on their application are applied: first and foremost, as thermal energy storage represented in Fig. 6 constituents in a thermally insulated tank 20. In this application, the capsules can also be mainly placed randomly. However, a symmetrical orientation is applicable as shown in Fig. 6.

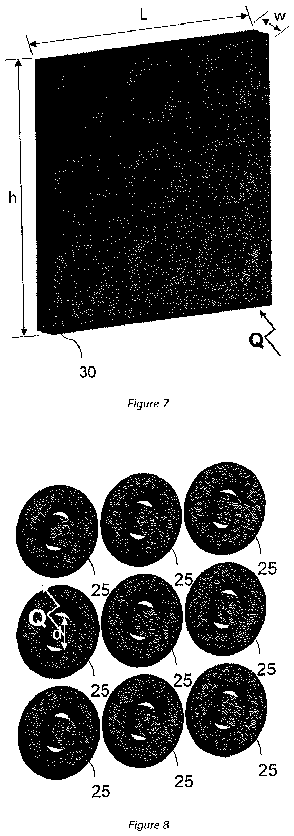

Secondly, they can be embedded in passive elements as shown in Fig. 7, such as building wall envelopes 30 or smaller walls surrounding objects requiring thermal regulation through passive cooling/heating.

Moreover, they can be positioned around objects requiring passive heating/cooling as shown in Fig. 8, such as electrical batteries 25 used in electric transportation.

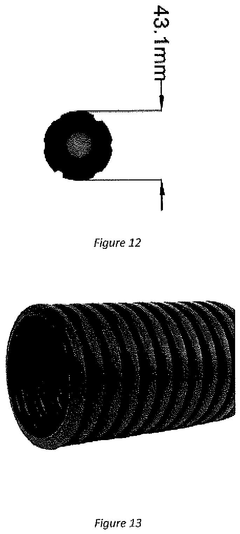

The reference packaging capsule 5 represented in fig. 11 has an overall length of e.g. 306 mm, whereas its thickness measured from its cross-section represented in fig. 12 is 43,1 mm. It is thus to be considered that the packaging capsule 5 has rather small dimensions in comparison with the reference corrugated pipe, Fig. 13, in the known heat exchange device disclosed by this document. The global effect thereof is that the performance of the packaging capsules in terms of heat transfer characteristics is improved up to 40 % thanks to the significantly increased heat exchange surface of the extended amount of smaller capsules which are thus mutually added.

In addition, this allows a rapid exchange of thermal loads with the environment, this providing a quick thermal loading globally.

Moreover, the compact configuration of the packaging capsule according to the invention makes it more sustainable and robust compared to the known corresponding elongated, potentially spiral configuration as shown in fig. 13. In the latter system, the phase change material PCM is stored in a system featured by two holes defining its inlet and outlet respectively, thus defining an open system. This is in contrast however with the encapsulated configuration of the packaging capsule according to the invention which is a closed system that is completely isolated from the surrounding space. It has an orifice yet, which is only used though for the filling of the capsule, and not doing the functioning thereof, when the capsule works.

The present invention also relates to a process of carrying out a thermal energy storage tank, wherein a heat transfer fluid is introduced to circulate in said system to charge and discharge heat from the overall system to the said thermal energy storage tank and hence the content of the said toroidal capsule contained therein, after a phase change material is encapsulated in the housing through a feeding opening that is formed, wherein the feeding port is communicated with the inside of the packaging capsule and is used for filling the phase change material.

## Claims

1. Phase change material container device for storing an amount of a storage material consisting of a phase change material (PCM) for acting as a heat collector element, consisting of a packaging capsule (5) which comprises an enveloping shell that is constituted by a rigid housing (51) having an outer surface (52) and enclosing a fillable inner space (54), for storing said phase change material (PCM) therein, wherein the outer surface of said housing (51) is provided with a heat exchanger device (40), wherein
said capsule (5) has a toroidal ring shape with a longitudinal axis (ℓ),
said packaging capsule (5) is filled with said phase-change material (PCM) forming a filling (15) that is encapsulated therein and made of a different material than said housing (51), both chemically and physically distinct from said PCM material stored inside said capsule (5) **characterized in that** said heat exchanger device (40) consists of a set of grooves (11, 12) arranged in said outer surface of said housing (51),
**in that** said set of grooves comprises a first subset of grooves (11) each of which is arranged in closed loop as single convolution extending transversely around said longitudinal axis (ℓ) and continuously over the whole cross-sectional perimeter of said toroidal housing (51), in a radial plane passing through the geometrical center (1) of said capsule (5),
wherein said capsule (5) has a tubular profile with a circular cross section, on which the first grooves (11) extend as successive circles orthogonally on said longitudinal axis (ℓ), esp. spaced equidistantly, and
**in that** said set of grooves comprises an additional subset of grooves (12) consisting of partial grooves (12), which are each arranged in open loop as a non-convolutional, limited groove (12) between successive convolutional grooves (11), in an alternating arrangement, extending equidistantly at the outer perimeter of the capsule (5), orthogonally on said longitudinal axis (ℓ), over a circular fraction.

2. Container device according to claim 1, **characterized in that** said capsule (5) has a ratio of its overall radius to the diameter of its tubular part that is comprised in the range between 1,5 and 3,5, preferably between 1,7 and 1,9, esp. approximately 1,8 and/or
wherein the radius from the center (1) of the capsule (5) to the center of its tubular cross section is comprised between 20 and 60 mm and a radius of said tubular cross section between 12 and 18 mm, particularly wherein the diameter of the capsule (5) is < 100 mm, preferably < 90 mm, esp. about 83 mm and the diameter of the tubular cross section is < 30 mm, esp. about 23 mm.

3. Container device according to claim 1 or 2, **characterized in that** said partial grooves (12) extend over a circular fraction of < ½ said perimeter, esp. wherein the number of grooves is > 60, preferably >70 for each category (11, 12) resp.,
more particularly wherein said grooves (11, 12) all have mutually the same cross section, constant and/or U-shaped.

4. Container device according to one of the claims 1 to 3, **characterized**
**in that** nozzle means (45) are arranged on said outer surface of the housing (51), communicating with said inner space (54) through an aperture (44), particularly wherein said nozzle means (45) and aperture (44) are arranged on said outer surface of said housing (51), and in that said nozzle means comprise a socket means (45) for filling said capsules (5) with said storage material PCM (15), particularly wherein said socket (45) has a prismatic profile along an axis (l) extending orthogonally from said toroidal housing (51), esp. wherein said socket has a cylindrical shape extending over a height (h) that is comprised between the radius (*ρ*) of the socket section and its diameter (ϕ), particularly wherein the ratio between said height (h) and said radius is comprised between 1 and 1,5, preferably between 1,1 and 1,3, esp. between 1,15 and 1,2.

5. Container device according to claim 4, **characterized in that** said socket (45) is made of one piece with said housing (51), wherein said capsule (5) is integrated in one single piece.

6. Container device according to one of the claims 1 to 5, **characterized in that** said capsule (5) is sealed, at least temporarily, esp. as a closed unit.

7. Container device according to one of the claims 1 to 6, **characterized in that** the capsules (5), esp. their housing (51), are made of metal materials, in particular copper, aluminum and/or stainless steel.

8. Container device according to one of the claims 1 to 7, **characterized in that** said PCM filling (15) is made of materials with a large latent heat of fusion and desirable melting/freezing point that store/release large amounts of heat, esp. wherein said PCM has a latent heat of fusion in excess of 200 kJ/kg.

9. Container device according to one of claims 1 to 8, **characterized in that** the PCM filling (15) is made of eutectic materials, particularly eutectic fatty acid mixtures along with hydrate salts,
or **in that** the PCM material is made of green organic alternatives based on biobased PCMs, notably edible oils and fat, waste animal fat, plant oils and waste cooking oil.

10. Container device according to one of the claims 1 to 8, **characterized in that** the PCM filling (15) is made of organic materials, particularly paraffin and fatty acids, or
of inorganic materials, particularly hydrated salts.

11. Thermal energy storage system for thermal management with toroidal macro-encapsulation comprising a plurality of phase change material container devices as defined in any of the preceding claims 1 to 10, **characterized in that** said capsules (5) are incorporated individually and mutually unconnected, forming an individual packaging capsule (5) without being connected to each other, wherein said toroidal capsules (5) work in conjunction with a heat transfer fluid (10) consisting of a gaseous or liquid fluid, for transporting heat between different points within said global system, wherein they are incorporated, particularly wherein the system is arranged to store and discharge thermal energy at temperatures higher than - 10°C and lower than 80°C.

12. Thermal energy storage system with toroidal macro-encapsulation working in conjunction with a plurality of said toroidal PCM filled capsules (5) acting as heat collection elements, according to the preceding claim 11, **characterized in that** said temperature is comprised in a working range > -10°C and < +4°C and/or between +10°C and +30°C.

13. Thermal energy storage system according to the claim 11 or 12, **characterized in that** it comprises a thermally insulated enclosure, an energy storage tank (20),
including a plurality of capsules (5), esp. virtually identical, wherein the heat exchange is carried out by said heat transfer fluid (10), which is introduced in said tank (20) for surrounding all of said plurality of capsules (5) requiring said thermal regulation therein, to circulate in said tank (20) to charge and discharge heat from the overall system to the said thermal energy storage tank (10) and hence the content of the said capsules (5) contained therein, particularly wherein the heat transfer fluid (10) is sole water or 50-50 wt. water/glycol mixture, circulating in the tank (20) and hence the PCM filled capsules (5), either driving away the generated heat loads of the warm storage or storing the heat loads in the cooled storage tank more particularly wherein the PCM filled capsules (5) are arranged symmetrically inside said tank (20).

14. Thermal energy storage system according to one of the claims 11 to 13, **characterized in that** the capsule (5) is sealed at least temporarily to contain the encapsulated PCM, particularly wherein the positioning of the toroidal capsules is provided in a packed-bed configuration consisting of a multitude of toroidal capsules that are arranged individually.

15. Thermal energy storage system according to claim 11 or 12, **characterized in that** said capsules (5') are embedded in passive elements, in particular building envelopes (30) or smaller walls surrounding objects for thermal regulation through passive cooling and heating, wherein said capsules are arranged as a passive element consisting of said building wall envelope, wherein the PCM filled capsules (5') are arranged inside the walls of building as passive elements to reduce building energy consumption and improve indoor environment, wherein the walls including the toroidal capsules (5') act as the heat sinks/sources according to the operation,
particularly wherein when the temperature of the space enclosed within the envelope walls exceeds the phase change temperature, the toroidal PCM filled capsules (5') act as heat sinks, absorbing the space's extra heat, sustaining the temperature to specific temperature levels; respectively when the temperature of the enclosed space is reduced below a certain temperature level, the toroidal capsules comprising PCM material release the heat and sustain the space's temperature constant, particularly wherein the heat transfer fluid is air, which is either used in a natural manner -then corresponding to a gravity based convection, more particularly wherein a secondary ventilation system is incorporated through which the heat transfer fluid (10) is then used in a forced convection.

16. Thermal energy storage system according to claim 11 or 12, **characterized in that** the positioning of the toroidal capsules (5") is provided in an aligned manner around cylindrical objects, in particular batteries for hybrid-electric transportation,
wherein it is based on a passive cooling/heating process, wherein the toroidal capsule is part of an object's, in particular an electrical battery cooling/heating system, where the heat generated/absorbed by the object is absorbed/provided by the PCM material, to sustain the temperature of the object within its operating temperature limits, wherein this increases the life cycle of the cooled/heated objects and thus, reduces the overall cost of the system where the said objects are placed, wherein the heat transfer fluid consists of the surrounding air, more particularly wherein a second cooling system is used based on a liquid coolant to drive away the objects such as said battery, heat loads.

17. Use of a thermal energy storage system according to one of the claims 11 to 16, by providing an active or passive cooling to systems such as power generation, building envelopes and around objects requiring thermal regulation in a specific operating temperature range, in particular electrical batteries for hybrid-electric transportation.

18. Method of producing a phase change material container device as defined in any of the claims 1 to 10 for use in an energy storage system as defined in any of the claims 11 to 16, **characterized in that** said capsules are generated by 3D printing to develop a large amount thereof.

19. Method for operating a thermal energy storage system as defined in claims 13-17,
**characterized in that** a heat transfer fluid (10) is introduced in said system to circulate in said system to charge and discharge heat from the overall system to said thermal energy storage tank (20) and hence the content of said toroidal capsule (5) contained therein, after a phase change material (PCM) is encapsulated in the housing (52) of said toroidal capsule (5) through a feeding opening that is formed, wherein the feeding port is communicated with the inside of the packaging capsule (5) and is used for filling the phase change material (PCM), particularly wherein the capsule is filled with the PCM material in a permanent or temporary manner after getting incorporated therein through a socket.

## Patentansprüche

1. Phasenwechselmaterial-Behältervorrichtung zum Speichern einer Menge eines Speicherungsmaterials, das aus einem Phasenwechselmaterial (phase change material - PCM) besteht, zum Funktionieren als ein Wärmekollektorelement, bestehend aus einer Verpackungskapsel (5), die einen umschließenden Mantel umfasst, der durch ein starres Gehäuse (51) gebildet wird, das eine Außenfläche (52) aufweist und einen befüllbaren Innenraum (54), zum Speichern des Phasenwechselmaterials (PCM) in demselben, umschließt, wobei die Außenfläche des Gehäuses (51) mit einer Wärmetauschervorrichtung (40) versehen ist, wobei
die Kapsel (5) eine kreisringförmige Ringform mit einer Längsachse (ℓ) aufweist und
die Verpackungskapsel (5) mit dem Phasenwechselmaterial (PCM) befüllt, das eine Befüllung (15) bildet, die in derselben verkapselt ist, und aus einem anderen Material als das Gehäuse (51) hergestellt ist, das sowohl chemisch als auch physikalisch von dem PCM-Material, das innerhalb der Kapsel (5) gespeichert wird, verschieden ist, **dadurch gekennzeichnet, dass** die Wärmetauschervorrichtung (40) aus einem Satz von Rillen (11, 12) besteht, die in der Außenfläche des Gehäuses (51) angeordnet sind,
dadurch, dass der Satz von Rillen einen ersten Teilsatz von Rillen (11) umfasst, von denen jede in einer geschlossenen Schleife als eine einzelne Windung angeordnet ist, die sich quer um die Längsachse (ℓ) und durchgehend über den gesamten Querschnittsumfang des kreisringförmigen Gehäuses (51) erstreckt, in einer radialen Ebene, die durch den geometrischen Mittelpunkt (1) der Kapsel (5) hindurchgeht,
wobei die Kapsel (5) ein röhrenförmiges Profil mit einem kreisförmigen Querschnitt aufweist, auf dem sich die ersten Rillen (11) als aufeinanderfolgende Kreise senkrecht auf der Längsachse (ℓ), insbes. abstandsgleich beabstandet, erstrecken, und
dadurch, dass der Satz von Rillen einen zusätzlichen Teilsatz von Rillen (12) umfasst, der aus unvollständigen Rillen (12) besteht, die jeweils in einer offenen Schleife als nicht-gewundene, begrenzte Rille (12) zwischen aufeinanderfolgenden gewundenen Rillen (11), in einer abwechselnden Anordnung, angeordnet sind, wobei sie sich abstandsgleich an dem äußeren Umfang der Kapsel (5), senkrecht auf der Längsachse (ℓ), über einen Teil eines Kreises erstrecken.

2. Behältervorrichtung nach Anspruch 1, **dadurch gekennzeichnet, dass** die Kapsel (5) ein Verhältnis ihres gesamten Radius zu dem Durchmesser ihres röhrenförmigen Teils aufweist, das in dem Bereich zwischen 1,5 und 3,5, vorzugsweise zwischen 1,7 und 1,9, insbes. annähernd 1,8, eingeschlossen ist, und/oder.
wobei der Radius von dem Mittelpunkt (1) der Kapsel (5) bis zu dem Mittelpunkt ihres röhrenförmigen Querschnitts zwischen 20 und 60 mm eingeschlossen ist und ein Radius des röhrenförmigen Querschnitts zwischen 12 und 18 mm, insbesondere, wobei der Durchmesser der Kapsel (5) < 100 mm, vorzugsweise < 90 mm, insbes. etwa 83 mm, beträgt und der Durchmesser des röhrenförmigen Querschnitts < 30 mm, insbes. etwa 23 mm, beträgt.

3. Behältervorrichtung nach Anspruch 1 oder 2, **dadurch gekennzeichnet, dass** sich die unvollständigen Rillen (12) über einen Teil eines Kreises von < ½ Umfang erstrecken, insbes., wobei die Anzahl von Rillen > 60, vorzugsweise > 70 jeweils für jede Kategorie (11, 12) beträgt,
ganz besonders, wobei die Rillen (11, 12) alle wechselseitig denselben Querschnitt, konstant und/oder U-förmig, aufweisen.

4. Behältervorrichtung nach einem der Ansprüche 1 bis 3, **dadurch gekennzeichnet, dass** Tüllenmittel (45) auf der Außenfläche des Gehäuses (51) angeordnet sind, die durch eine Öffnung (44) mit dem Innenraum (54) in Verbindung stehen, insbesondere, wobei die Tüllenmittel (45) und die Öffnung (44) auf der Außenfläche des Gehäuses (51) angeordnet sind, und dadurch, dass die Tüllenmittel ein Stutzenmittel (45) zum Befüllen der Kapseln (5) mit dem Speicherungsmaterial PCM (15) umfassen, insbesondere, wobei der Stutzen (45) ein prismatisches Profil entlang einer Achse (l) aufweist, die sich senkrecht von dem kreisringförmigen Gehäuse (51) aus erstreckt, insbes., wobei der Stutzen eine zylindrische Form aufweist, die sich über eine Höhe (h) erstreckt, die zwischen dem Radius (ρ) der Stutzensektion und ihrem Durchmesser (ϕ) eingeschlossen ist, insbesondere, wobei das Verhältnis zwischen der Höhe (h) und dem Radius zwischen 1 und 1,5, vorzugsweise zwischen 1,1 und 1,3, insbes. zwischen 1,15 und 1,2, eingeschlossen ist.

5. Behältervorrichtung nach Anspruch 4, **dadurch gekennzeichnet, dass** der Stutzen (45) aus einem Stück mit dem Gehäuse (51) hergestellt ist, wobei die Kapsel (5) in einem einzigen Stück integriert ist.

6. Behältervorrichtung nach einem der Ansprüche 1 bis 5, **dadurch gekennzeichnet, dass** die Kapsel (5), zumindest zeitweilig, abgedichtet ist, insbes. als eine geschlossene Einheit.

7. Behältervorrichtung nach einem der Ansprüche 1 bis 6, **dadurch gekennzeichnet, dass** die Kapseln (5), insbes. ihr Gehäuse (51), aus Metallwerkstoffen, insbesondere Kupfer, Aluminium und/oder rostfreiem Stahl, hergestellt sind.

8. Behältervorrichtung nach einem der Ansprüche 1 bis 7, **dadurch gekennzeichnet, dass** die PCM-Befüllung (15) aus Materialien mit einer großen latenten Schmelzwärme und einem wünschenswerten Schmelz-/Gefrierpunkt hergestellt ist, die große Wärmemengen speichern/freisetzen, insbes., wobei das PCM eine latente Schmelzwärme von über 200 kJ/kg aufweist.

9. Behältervorrichtung nach einem der Ansprüche 1 bis 8, **dadurch gekennzeichnet, dass** die PCM-Befüllung (15) aus eutektischen Materialien, insbesondere eutektischen Fettsäuregemischen zusammen mit Hydratsalzen, hergestellt ist,
oder dadurch, dass das PCM-Material aus grünen organischen Alternativen auf Grundlage von biobasierten PCM, vor allem essbaren Ölen und Fett, tierischem Abfallfett, Pflanzenölen und Abfallspeiseöl, hergestellt ist.

10. Behältervorrichtung nach einem der Ansprüche 1 bis 8, **dadurch gekennzeichnet, dass** die PCM-Befüllung (15) aus organischen Materialien, insbesondere Paraffin und Fettsäuren, oder aus anorganischen Materialien, insbesondere hydratisierten Salzen, hergestellt ist.

11. Wärmeenergie-Speicherungssystem zum Wärmemanagement mit kreisringförmiger Makroverkapselung, das eine Vielzahl von Phasenwechselmaterial-Behältervorrichtungen nach einem der vorhergehenden Ansprüche 1 bis 10 umfasst, **dadurch gekennzeichnet, dass** die Kapseln (5) einzeln und wechselseitig unverbunden enthalten sind, wobei sie eine einzelne Verpackungskapsel (5) bilden, ohne miteinander verbunden zu sein, wobei die kreisringförmigen Kapseln (5) in Verbindung mit einem Wärmeübertragungsfluid (10) arbeiten, das aus einem gasförmigen oder flüssigen Fluid besteht, zum Befördern von Wärme zwischen unterschiedlichen Punkten innerhalb des gesamten Systems, in dem sie enthalten sind, insbesondere, wobei das System angeordnet ist, um Wärmeenergie bei Temperaturen, höher als - 10 °C und niedriger als 80 °C, zu speichern und abzugeben.

12. Wärmeenergie-Speicherungssystem mit kreisringförmiger Makroverkapselung, das in Verbindung mit einer Vielzahl von den kreisringförmigen PCM-befüllten Kapseln (5), die als Wärmesammlungselemente funktionieren, arbeitet, nach dem vorhergehenden Anspruch 11, **dadurch gekennzeichnet, dass** die Temperatur in einem Arbeitsbereich > - 10 °C und < + 4 °C und/oder zwischen + 10 °C und + 30 °C eingeschlossen ist.

13. Wärmeenergie-Speicherungssystem nach Anspruch 11 oder 12, **dadurch gekennzeichnet, dass** es eine wärmeisolierte Umhüllung, einen Energiespeicherungstank (20), der eine Vielzahl von Kapseln (5), insbes. praktisch identischen, einschließt, wobei der Wärmeaustausch durch das Wärmeübertragungsfluid (10) ausgeführt wird, das in den Tank (20) eingeleitet wird, um alle von der Vielzahl von Kapseln (5), welche die Wärmeregulierung erfordern, darin zu umschließen, um in dem Tank (20) im Umlauf zu sein, um Wärme von dem gesamten System zu laden und abzugeben an den Wärmeenergie-Speicherungstank (10) und folglich den Inhalt der Kapseln (5), die darin enthalten sind,
insbesondere, wobei das Wärmeübertragungsfluid (10) ausschließlich Wasser oder ein 50:50-Wasser-Glykol-Gemisch nach Gewicht ist, das in dem Tank (20) und folglich den PCM-befüllten Kapseln (5) in Umlauf ist, wobei es entweder die erzeugten Wärmelasten der warmen Speicherung wegleitet oder die Wärmelasten in dem gekühlten Speicherungstank speichert, ganz besonders, wobei die PCM-befüllten Kapseln (5) symmetrisch innerhalb des Tanks (20) angeordnet sind.

14. Wärmeenergie-Speicherungssystem nach einem der Ansprüche 11 bis 13, **dadurch gekennzeichnet, dass** die Kapsel (5) zumindest zeitweilig abgedichtet ist, um das verkapselte PCM zu enthalten, insbesondere, wobei die Positionierung der kreisringförmigen Kapseln in einer Festbett-Konfiguration bereitgestellt wird, die aus einer großen Anzahl von kreisringförmigen Kapseln besteht, die einzeln angeordnet sind.

15. Wärmeenergie-Speicherungssystem nach Anspruch 11 oder 12, **dadurch gekennzeichnet, dass** die Kapseln (5') in passiven Elementen, insbesondere Gebäudehüllen (30) oder kleineren Wänden, eingebettet sind, die Objekte zur Wärmeregulierung durch passive Kühlung und Heizung umschließen, wobei die Kapseln als ein passives Element angeordnet sind, das aus der Gebäudewandhülle besteht, wobei die PCM-befüllten Kapseln (5') innerhalb der Gebäudewände als passive Elemente angeordnet sind, um einen Gebäudeenergieverbrauch zu verringen und eine Innenraumumgebung zu verbessern, wobei die Wände, welche die kreisringförmigen Kapseln (5') einschließen, entsprechend dem Betrieb als die Wärmesenken/-quellen funktionieren,
insbesondere, wobei, wenn die Temperatur des Raums, der innerhalb der Hüllenwände eingeschlossen ist, die Phasenwechseltemperatur überschreitet, die kreisringförmigen PCM-befüllten Kapseln (5') als Wärmesenken funktionieren, wobei sie die zusätzliche Wärme des Raums absorbieren, wobei sie die Temperatur auf spezifischen Temperaturniveaus aufrechterhalten, beziehungsweise, wobei, wenn die Temperatur des eingeschlossenen Raums unter ein bestimmtes Temperaturniveau herabgesetzt wird, die kreisringförmigen Kapseln, die PCM-Material umfassen, die Wärme freisetzen und die Temperatur des Raums konstant aufrechterhalten, insbesondere, wobei das Wärmeübertragungsfluid Luft ist, die entweder auf eine natürliche Weise genutzt wird - was dann einer schwerkraftbasierten Konvektion entspricht, ganz besonders, wobei ein sekundäres Lüftungssystem enthalten ist, durch welches das Wärmeübertragungsfluid (10) dann in einer Zwangskonvektion verwendet wird.

16. Wärmeenergie-Speicherungssystem nach Anspruch 11 oder 12, **dadurch gekennzeichnet, dass** die Positionierung der kreisringförmigen Kapseln (5") auf eine ausgerichtete Weise um zylindrische Objekte, insbesondere Batterien zu hybrid-elektrischen Beförderung, bereitgestellt wird,
wobei es auf einem passiven Kühlungs-/Heizungsvorgang beruht, wobei die kreisringförmige Kapsel Teil eines Kühlungs-/Heizungssystems eines Objekts, insbesondere einer elektrischen Batterie, ist, wobei die durch das Objekt erzeugte/absorbierte Wärme durch das PCM-Material absorbiert/bereitgestellt wird, um die Temperatur des Objekts innerhalb seiner Betriebstemperaturgrenzen aufrechtzuerhalten, wobei dies die Nutzungsdauer der gekühlten/geheizten Objekte steigert, die Gesamtkosten des Systems, wo die Objekte platziert sind, verringert, wobei das Wärmeübertragungsfluid aus der Umgebungsluft besteht, ganz besonders, wobei ein zweites Kühlungssystem auf Grundlage eines flüssigen Kühlmittels verwendet wird, um die Wärmelasten des Objekts, wie beispielsweise der Batterie, wegzuleiten.

17. Verwendung eines Wärmeenergie-Speicherungssystems nach einem der Ansprüche 11 bis 16 durch Bereitstellen einer aktiven oder passiven Kühlung für Systeme, wie beispielsweise Energieerzeugung, Gebäudehüllen, und um Objekte, die eine Wärmeregulierung in einem spezifischen Betriebstemperaturbereich erfordern, insbesondere elektrische Batterien zur hybrid-elektrischen Beförderung.

18. Verfahren zum Herstellen einer Phasenwechselmaterial-Behältervorrichtung nach einem der Ansprüche 1 bis 10 zur Verwendung in einem Wärmeenergie-Speicherungssystem nach einem der Ansprüche 11 bis 16, **dadurch gekennzeichnet, dass** die Kapseln durch 3D-Drucken erzeugt werden, um eine große Menge derselben hervorzubringen.

19. Verfahren zum Betreiben eines Wärmeenergie-Speicherungssystems nach einem der Ansprüche 13 bis 17, **dadurch gekennzeichnet, dass** ein Wärmeübertragungsfluid (10) in dem System eingeleitet wird, um in dem System in Umlauf zu sein, um Wärme von dem gesamten System zu laden und abzugeben an den Wärmeenergie-Speicherungstank (20) und folglich den Inhalt der kreisringförmigen Kapsel (5), die darin enthalten ist, nachdem ein Phasenwechselmaterial (PCM) in dem Gehäuse (52) der kreisringförmigen Kapsel (5) verkapselt ist, durch eine Einspeisungsöffnung, die geformt ist, wobei der Einspeisungsanschluss mit der Innenseite der Verpackungskapsel (5) in Verbindung steht und zum Einfüllen des Phasenwechselmaterials (PCM) verwendet wird, insbesondere, wobei die Kapsel auf eine dauerhafte oder zeitweilige Weise mit dem PCM-Material befüllt wird, nachdem es durch einen Stutzen darin eingeschlossen wird.

## Revendications

1. Dispositif à récipient d'un matériau à changement de phase pour stocker une quantité de matériau de stockage constitué d'un matériau à changement de phase (PCM) destiné à servir d'élément collecteur de chaleur, constitué d'une capsule d'emballage (5), qui comprend une coque enveloppante constituée d'un boîtier rigide (51) ayant une surface extérieure (52) et renfermant un espace intérieur remplissable (54), pour y stocker ledit matériau à changement de phase (PCM) dans lequel la surface extérieure dudit boîtier (51) étant pourvue d'un dispositif échangeur de chaleur (40), ladite capsule (5) présentant une forme d'anneau toroïdal d'axe longitudinal (ℓ), et ladite capsule d'emballage (5) étant remplie dudit matériau à changement de phase (PCM) formant un remplissage (15) qui y est encapsulé et constitué d'un matériau différent de celui dudit boîtier (51) distinct à la fois chimiquement et physiquement dudit matériau PCM stocké à l'intérieur de ladite capsule (5), **caractérisé en ce que** ledit dispositif échangeur de chaleur (40) est constitué d'un ensemble de rainures (11, 12) agencées dans ladite surface extérieure dudit boîtier (51), **en ce que** ledit ensemble de rainures comprend un premier sous-ensemble de rainures (11) dont chacune est disposée en boucle fermée sous forme d'une seule circonvolution s'étendant transversalement autour dudit axe longitudinal (f) et en continu sur tout le périmètre transversal dudit boîtier toroïdal (51), dans un plan radial passant par le centre géométrique (1) de ladite capsule (5), dans laquelle ladite capsule (5) présente un profil tubulaire à section transversale circulaire, sur lequel les premières rainures (11) s'étendent sous forme de cercles successifs orthogonalement sur ledit axe longitudinal (f), notamment espacés de manière équidistante, et **en ce que** ledit ensemble de rainures comprend un sous-ensemble supplémentaire de rainures (12) constitué de rainures partielles (12), qui sont chacune disposées en boucle ouverte comme une rainure limitée non circonvolutionnelle (12) entre des rainures circonvolutionnelles successives (11), suivant un agencement alterné, s'étendant de manière équidistante sur le périmètre extérieur de la capsule (5), orthogonalement sur ledit axe longitudinal (et **en ce que** ledit ensemble de rainures comprend un sous-ensemble supplémentaire de rainures (12) constitué de rainures partielles (12), qui sont chacune disposées en boucle ouverte comme une rainure limitée non circonvolutionnelle (12) entre des rainures circonvolutionnelles successives (11), suivant un agencement alterné, s'étendant de manière équidistante sur le périmètre extérieur de la capsule (5), orthogonalement sur ledit axe longitudinal (f), sur une fraction circulaire), sur une fraction circulaire.

2. Dispositif à récipient selon la revendication 1, **caractérisé en ce que** la capsule (5) a un rapport entre son rayon global et le diamètre de sa partie tubulaire qui est compris dans la plage comprise entre 1,5 et 3,5, de préférence entre 1,7 et 1,9, en particulier environ 1,8 et/ou dans lequel le rayon du centre (1) de la capsule (5) au centre de sa section transversale tubulaire est compris entre 20 et 60 mm et un rayon de ladite section transversale tubulaire entre 12 et 18 mm, en particulier dans lequel le diamètre de la capsule (5) est < 100 mm, de préférence < 90 mm, en particulier environ 83 mm et le diamètre de la section transversale tubulaire est < 30 mm, en particulier environ 23 mm.

3. Dispositif à récipient selon la revendication 1 ou 2, **caractérisé en ce que** lesdites rainures partielles s'étendent sur une fraction circulaire de < ½ dudit périmètre,
en particulier dans lequel le nombre de rainures est > 60, de préférence > 70 pour chaque catégorie (11,12) respectivement plus particulièrement dans lequel lesdites rainures (11,12) ont toutes mutuellement la même section transversale, constante et/ou en forme de U.

4. Dispositif à récipient selon l'une des revendications 1 à 3, **caractérisé en ce que** des moyens d'ajutage (45) sont agencés sur ladite surface extérieure du boîtier (51), communiquant avec ledit espace intérieur (54) par une ouverture (44), en particulier dans lequel lesdits moyens d'ajutage (45) et l'ouverture (44) sont disposés sur ladite surface extérieure dudit boîtier (51), et **en ce que** lesdits moyens d'ajutage comprennent un moyen de douille (45) pour remplir lesdites capsules (5) avec ledit matériau de stockage PCM (15), en particulier dans lequel ladite douille (45) a un profil prismatique le long d'un axe (l) s'étendant orthogonalement à partir dudit boîtier toroïdal (51), en particulier dans lequel ladite douille a une forme cylindrique s'étendant sur une hauteur (h) qui est comprise entre le rayon (ρ) de la section de douille et son diamètre (φ), en particulier dans lequel le rapport entre ladite hauteur (h) et ledit rayon est compris entre 1 et 1,5, de préférence entre 1,1 et 1,3, en particulier entre 1,15 et 1,2.

5. Dispositif à conteneur selon la revendication 4, **caractérisé en ce que** ladite douille (45) est réalisée d'une seule pièce avec ledit boîtier (51), dans lequel ladite capsule (5) est intégrée en une seule pièce.

6. Dispositif à récipient selon l'une des revendications 1 à 5, **caractérisé en ce que** ladite capsule (5) est scellée, au moins temporairement, notamment sous forme d'entité fermée.

7. Dispositif à récipient selon l'une des revendications 1 à 6, **caractérisé en ce que** les capsules (5), en particulier leur boîtier (51), sont constitués de matériaux métalliques, notamment de cuivre, d'aluminium et/ou d'acier inoxydable.

8. Dispositif à récipient selon l'une des revendications 1 à 7, **caractérisé en ce que** ledit remplissage au PCM (15) est constitué de matériaux ayant une chaleur latente de fusion élevée et un point de fusion/congélation souhaitable qui stockent/libèrent de grandes quantités de chaleur, en particulier dans lequel ledit PCM a une chaleur latente de fusion dépassant 200 kJ/kg.

9. Dispositif à récipient selon l'une des revendications 1 à 8, **caractérisé en ce que** le remplissage PCM (15) est constitué de matériaux eutectiques, en particulier de mélanges d'acides gras eutectiques accompagnés de sels hydratés, ou **en ce que** le matériau PCM est constitué d'alternatives vertes organiques à base de PCM biosourcés, notamment d'huiles et de graisses alimentaires, de graisses animales usagées, d'huiles végétales et d'huiles de cuisson usagées.

10. Dispositif à récipient selon l'une des revendications 1 à 8, **caractérisé en ce que** le remplissage PCM (15) est constitué de matières organiques, notamment de paraffine et d'acides gras, ou de matières inorganiques, notamment de sels hydratés.

11. Système de stockage d'énergie thermique pour gestion thermique à macro-encapsulation toroïdale comprenant plusieurs dispositifs à récipient d'un matériau à changement de phase tels que définis dans l'une quelconque des revendications précédentes 1 à 10, **caractérisé en ce que** lesdites capsules (5) sont incorporées individuellement et mutuellement déconnectées, formant une capsule d'emballage individuelle (5) sans être connectées les unes aux autres, dans lequel lesdites capsules toroïdales (5) fonctionnent de concert avec un fluide de transfert de chaleur (10) constitué d'un fluide gazeux ou liquide, pour transporter de la chaleur entre différents points au sein dudit système global, dans lequel elles sont incorporées, en particulier dans lequel le système est agencé pour stocker et évacuer de l'énergie thermique à des températures supérieures à -10°C et inférieures à 80°C.

12. Système de stockage d'énergie thermique à macro-encapsulation toroïdale fonctionnant de concert avec une pluralité desdites capsules toroïdales remplies de PCM (5) agissant comme éléments de collecte de chaleur, selon la revendication précédente 11, **caractérisé en ce que** ladite température est comprise dans une plage de travail > -10°C et < +4°C et/ou entre +10°C et +30°C.

13. Système de stockage d'énergie thermique selon la revendication 11 ou 12, **caractérisé en ce qu'**il comprend une enceinte isolée thermiquement, un réservoir de stockage d'énergie (20), comprenant plusieurs capsules (5), en particulier pratiquement identiques, dans lequel l'échange de chaleur est effectué par ledit fluide de transfert de chaleur (10), qui est introduit dans ledit réservoir (20) pour entourer l'ensemble de ladite pluralité de capsules (5) nécessitant ladite régulation thermique à l'intérieur de celui-ci, pour circuler dans ledit réservoir (20) pour charger et décharger la chaleur du système global vers ledit réservoir de stockage d'énergie thermique (10) et donc le contenu desdites capsules (5) contenues dans celui-ci, en particulier dans lequel le fluide de transfert de chaleur (10) est de l'eau seule ou un mélange eau/glycol à 50-50 % en poids, circulant dans le réservoir (20) et donc dans les capsules remplies de PCM (5), soit en chassant les charges thermiques générées par le stockage chaud, soit en stockant les charges thermiques dans le réservoir de stockage refroidi, plus particulièrement dans lequel les capsules remplies de PCM (5) sont disposées symétriquement à l'intérieur dudit réservoir (20).

14. Système de stockage d'énergie thermique selon l'une des revendications 11 à 13, **caractérisé en ce que** la capsule (5) est scellée au moins temporairement pour contenir le PCM encapsulé, en particulier dans lequel le positionnement des capsules toroïdales est prévu selon une configuration de lit fixe constituée d'une multitude de capsules toroïdales agencées individuellement

15. Système de stockage d'énergie thermique selon la revendication 11 ou 12, **caractérisé en ce que** lesdites capsules (5') sont intégrées dans des éléments passifs, en particulier des enveloppes de bâtiment (30) ou des parois plus petites entourant des objets pour une régulation thermique par refroidissement et chauffage passifs, lesdites capsules étant disposées comme un élément passif constitué de ladite enveloppe de paroi de bâtiment, les capsules remplies de PCM (5') étant disposées à l'intérieur des parois du bâtiment comme éléments passifs pour réduire la consommation d'énergie du bâtiment et améliorer l'environnement intérieur, les parois comprenant les capsules toroïdales (5') agissant comme des dissipateurs/sources de chaleur selon le fonctionnement, en particulier dans lequel les capsules toroïdales remplies de PCM (5') agissent comme des dissipateurs de chaleur, dans lequel la température de l'espace enfermé dans les parois de l'enveloppe dépasse la température de changement de phase absorbant la chaleur supplémentaire de l'espace, maintenant la température à des niveaux de température spécifiques ; respectivement lorsque la température de l'espace enfermé est réduite en dessous d'un certain niveau de température, les capsules toroïdales comprenant un matériau PCM libèrent la chaleur et maintiennent la température de l'espace constante, en particulier dans lequel le fluide de transfert de chaleur est de l'air, qui est soit utilisé de manière naturelle - correspondant alors à une convection basée sur la gravité - , plus particulièrement dans lequel un système de ventilation secondaire est incorporé par lequel le fluide de transfert de chaleur (10) est alors utilisé selon une convection forcée.

16. Système de stockage d'énergie thermique selon la revendication 11 ou 12, **caractérisé en ce que** le positionnement des capsules toroïdales (5") est prévu de manière alignée autour d'objets cylindriques, en particulier de batteries pour un transport hybride-électrique, dans lequel il est basé sur un processus de refroidissement/chauffage passif, dans lequel la capsule toroïdale fait partie d'un objet, en particulier d'un système de refroidissement/chauffage d'une batterie électrique, où la chaleur générée/absorbée par l'objet est absorbée/fournie par le matériau PCM, pour maintenir la température de l'objet dans ses limites de température de fonctionnement, dans lequel cela augmente le cycle de vie des objets refroidis/chauffés et réduit ainsi le coût global du système où lesdits objets sont placés, dans lequel le fluide de transfert de chaleur est constitué de l'air ambiant,
plus particulièrement dans lequel un deuxième système de refroidissement basé sur un liquide de refroidissement est utilisé pour écarter les charges thermiques de l'objet tel que ladite batterie.

17. Utilisation d'un système de stockage d'énergie thermique selon l'une des revendications 11 à 16, en fournissant un refroidissement actif ou passif à des systèmes, tels que générateurs d'énergie électrique, enveloppes de bâtiments, et autour d'objets nécessitant une régulation thermique dans une plage de température de fonctionnement spécifique, notamment les batteries électriques pour le transport hybride-électrique.

18. Procédé de production d'un dispositif à récipient de matériau à changement de phase tel que défini dans l'une quelconque des revendications 1 à 10 destiné à être utilisé dans un système de stockage d'énergie tel que défini dans l'une quelconque des revendications 11 à 16, **caractérisé en ce que** lesdites capsules sont générées par impression 3D pour en produire une grande quantité.

19. Procédé pour faire fonctionner un système tel que défini dans les revendications 13 à 17, **caractérisé en ce qu'**un fluide de transfert de chaleur (10) est introduit dans ledit système pour circuler dans ledit système afin de charger et de décharger de la chaleur du système global vers ledit réservoir de stockage d'énergie thermique (20) et donc le contenu de ladite capsule toroïdale (5) contenue dans celui-ci, après qu'un matériau à changement de phase (PCM) est encapsulé dans le boîtier (52) de ladite capsule toroïdale (5) à travers une ouverture d'alimentation qui est formée, l'orifice d'alimentation étant en communication avec l'intérieur de la capsule d'emballage (5) et étant utilisé pour remplir le matériau à changement de phase (PCM),
en particulier dans lequel la capsule est remplie du matériau PCM d'une manière permanente ou temporaire après y avoir été incorporée par une douille.
